# EUROPEAN PATENT SPECIFICATION

(11) **EP 3 036 194 B1**
(45) Date of publication and mention of the grant of the patent: **27.03.2019**
(21) Application number: 14799535.1
(22) Date of filing: 21.08.2014
(51) Int. Cl.: C01F 17/00, C09K 11/77, C01G 29/00

(54) **OPTICAL COMPOUNDS, USE AND METHOD FOR PRODUCING THEREOF**
OPTISCHE VERBINDUNGEN, VERWENDUNG UND VERFAHREN ZUR HERSTELLUNG DAVON
COMPOSÉS OPTIQUES, UTILISATION ET PROCÉDÉ POUR LEUR PRODUCTION

(30) Priority: 22.08.2013 IT PD20130236
(43) Date of publication of application: 29.06.2016
(73) Proprietor: Bep S.R.L., 35031 Abano Terme (IT); Back, Michele, 30141 Murano Venezia (IT); Marin, Riccardo, 30027 San Donà di Piave (IT); Mazzucco, Nicolò, 30141 Murano Venezia (IT)
(72) Inventor: BACK, Michele, 30141 Murano Venezia (IT); MARIN, Riccardo, 30027 San Donà di Piave (IT); MAZZUCCO, Nicolò, 30141 Murano Venezia (IT)
(74) Representative: Leganza, Alessandro
(86) International application number: PCT/IB2014/064013
(87) International publication number: WO 2015/025297

(56) References cited:
- WO-A1-2009/108870
- WO-A2-2008/118536
- WO-A2-2010/117990
- CN-A- 102 658 116
- US-A- 5 976 721
- US-A1- 2006 091 022
- SAMMES N M ET AL: "Bismuth based oxide electrolytes- structure and ionic conductivity", JOURNAL OF THE EUROPEAN CERAMIC SOCIETY, ELSEVIER SCIENCE PUBLISHERS, BARKING, ESSEX, GB, vol. 19, no. 10, 1 August 1999 (1999-08-01), pages 1801-1826, XP004171867, ISSN: 0955-2219, DOI: 10.1016/S0955-2219(99)00009-6

## Description

### Technical Field

The present invention relates generally to photoactive materials i.e. that are able to emit photons after the excitation with infrared (IR), or ultraviolet (UV), or visible (VIS) radiation or also ionizing particles. More particularly, the present invention pertains to a crystalline photoactive composition in the form of doped particles (e.g. micro-sized or nano-sized particles) and to a producing method thereof. Such particles exhibit non-linear optical phenomena known in the literature by the terms photon upconversion, photon down-conversion, photon down-shifting and scintillation.

### Background Art

In recent years, materials exhibiting photoactive properties, and particularly nonlinear optical properties such as up-conversion, have gained great interest due to the many potential applications in biomedicine, telecommunications, photovoltaic, sensors and lighting.

It is well known that up-conversion consists in the sequential absorption of two or more photons which leads to the emission of photons having higher energy than the energy of the excitation photons. The phenomenon of down-conversion consists in the emission of two or more photons with energy lower than the energy of the excitation photons. The phenomenon of photon down-shifting occurs when the absorption of a photon leads to the emission of a single photon with energy lower than the energy of the excitation photons. Finally, scintillation is the emission of photons in the visible range from the recombination of electron-hole pairs generated by ionizing particles and/or radiation.

In the literature there are known various systems exhibiting photon up-conversion, typically from IR or near IR (NIR) to VIS or NIR, and photon down-conversion typically from UV or VIS to VIS or NIR.

Generally, these systems consist of a base material called 'matrix' or 'host' doped with one or more ions. Typically such ions are selected from to the series of rare earth: indeed lanthanides present a 'ladder-like' electronic configuration which allows for the nonlinear optical phenomenon of the up-conversion to (and down-conversion) to take place.

From the structural point of view, the matrices known in the prior art present a glassy or a crystalline structure. A crystalline matrix can be prepared in the form of a bulk crystal but also as a nanoparticle or a nanocrystal (NC). Nevertheless, it is well known that the best performing up-converter matrices are based on crystalline nanoparticles (e.g. NaYF₄). The crystalline matrices used so far are mostly fluorides, given their acceptable stability and low phonon energy: these are well-known features that allow high efficiency of the up-converting system (Nanoscale, 2013, 5, 23 and references cited therein).

Matrices based on metal oxides (e.g. Y₂O₃, Y₂O₂S and silicates) are used for commercial applications in the field of lighting (see Phosphor Handbook, WM Yen, 2006, CRC, 2nd ed.). For optical applications a wide range of metal oxides are used as crystalline matrices. Known examples in the scientific and patent literature cover yttrium oxide (Y₂O₃) and gadolinium oxide (Gd₂O₃). Curiously, bismuth oxide (III) (Bi₂O₃) has received less attention as host material for optical applications in spite of the promising features. Indeed, most of the photoactive properties of bismuth oxide have been recently exploited for catalyst or electrochemical applications and not for optical devices.

For instance, in the patent US5006494 stable phases of bismuth oxide have been synthesized by introducing in the composition metal oxides with stabilizing effect such as yttria (Y₂O₃), zirconia (ZrO₂), toria (ThO₂) and afnia (HfO₂). However these ceramic materials have been prepared to optimize the conductivity of oxygen ions and therefore are useful as ceramic electrolytes (e.g. for the automotive industry). Similar patents in this field are: WO2010117990A3 disclosing a self sustaining catalyst used for reforming hydrocarbon for fuel cell comprising a ion conductive support;
US20060091022A1, describing a sensor system for detecting gases; US20090218220 disclosing an amperometric ceramic cell for electrochemical sensor used in emissions detection in diesel fueled; and finally US5976721A disclosing a cell for producing chemical products and cogenerating electrical energy. All these documents describe formulations for the active components (e.g. an electrode) comprising bismuth oxide doped with: yttrium, gadolinium, samarium, cerium, erbium, germanium vanadium, copper or other elements.

Although the aforementioned disclosures are useful to assess the related art of the present invention, they are definitely not useful to those skilled in the art for designing active materials for optical devices based on bismuth oxide.

Another noticeable application of bismuth oxide for catalytic applications is described in the Chinese document CN102658116. This patent discloses a rare earth element doped bismuth oxide photocatalyst having granular form wherein the rare earth element comprises Eu and/or Ce. Although the photocatalyst has desired light absorbing ability, a simple and environment-friendly preparation method, it is not suitable for up-conversion applications. In fact, the active component of the photocatalyst uses bismuth oxide doped with europium and/or cerium that are not able to absorb IR radiation. Therefore the disclosure made in the application CN102658116A is not useful to the skilled in the art for preparing a doped bismuth oxide photoactive material for optical applications and particularly for up-converters.

Generally, prior art formulations comprise bismuth (III) ions as a dopant agent typically in association with lanthanides; rarely bismuth oxide represent the base material for the oxide host which is generally Y2O3. For example, patents US5230831 and GB1185906A describe photoactive compositions based on rare earth oxides or more complex compositions comprising traces of Bi3+ ions, which act as activator of the luminescent material (i.e. a phosphor). In the application EP2127682A1 Bi2O3 nanoparticles have been used as a contrast agent for X-rays tomography. Document US7679060 describes a liquid matrix comprising scintillating nano-phosphors doped with bismuth oxide. Moreover, the majority of the known up-converting systems including Bi2O3, refer to glass compositions wherein the bismuth oxide is only a trace constituent compound and not the main constituent material.

Only recently a patent application (CN201210192587A) has been filed which discloses a crystalline inorganic compound based on oxysulphide bismuth to be used in applications of up-conversion. However, the technical solution described in this application presents considerable drawbacks related to both the material structure and the production process: firstly, the matrix is characterized by a very complex composition; furthermore, the synthesis must necessarily take place in a sulfur atmosphere which is an extremely toxic gas whose safe management requires complex and expensive plant facilities; finally, the temperature of the synthesis according to this patent is very high (between 1000 to 1400 °C), resulting in a energy-consuming and costly production process.

The production process of many of the materials described above make use of the so-called 'Pechini synthesis', named after the inventor (see US3330697). In 1967 this technique was originally used in the deposition process of dielectric films for capacitors, but subsequently it has been applied in the synthesis of finely dispersed multicomponent oxides. The method is based on the following steps: first, mixing positive ions in a solution; then, transformation of the solution in a polymer gel under controlled conditions; and finally the oxide precursor having a high degree of crystallinity is obtained after that the polymer matrix is removed. Although the use of the Pechini synthesis and its variants is well-known among those skilled in the art, it has not yet been applied in the synthesis of bismuth oxides as a crystal host.

More recently, a different production process was disclosed in the application WO2008118536. The method provides active glass nanoparticles that exhibit upconversion photoluminescence (e.g. for bio imaging devices and light emitting devices) by subjecting an active glass substrate material to laser ablation. The substrate material is in liquid or gaseous environment. The substrate material comprises erbium doped material particularly erbium-doped bismuth oxide material or bismuth oxide based erbium-doped glass material. In WO2008118536A2 the capability of nanoparticle generation by laser ablation has been investigated and clearly the patent scope is focused on this manufacturing process, while optimization of the upconversion photoluminescence characteristic is clearly out of the scope of this invention. It is interesting to point out that this method provides active nanoparticles exhibiting up-conversion having a glass matrix and not a crystalline matrix. In particular, it does not disclose any application of the laser ablation technique for producing ytterbium-doped bismuth oxide nanocrystal, and finally does not disclose a mean for controlling the crystalline phases of the nanoparticles produced by laser ablation.

In summary, disclosures made in WO2008118536 are indeed useful to those skilled in the art to develop a method for manufacturing up-converting nanoparticles, but it useless for controlling the crystallinity of the matrix (i.e. the different polymorphs of bismuth oxide) and thus to optimize the optical characteristics of the nanoparticles according to specific needs.

### Disclosure of Invention

### Technical Problem

The above described prior art demonstrates that the properties of crystalline doped bismuth oxide have not been fully exploited, despite the potential application of this material as crystalline host exhibiting non-linear optical properties such as upconversion.

In view of the above drawbacks of the prior art, there is still a need for novel optical crystalline compounds having improved non-linear optical properties (e.g. upconversion), and also for simple producing methods thereof.

Consequently, the present invention intends to overcome the disadvantages or drawbacks existing in the prior art related to bismuth oxide used as crystalline host material for applications exploiting the photoactive properties of such oxide and particularly non-linear optical properties such as up-conversion.

### Solution to Problem

### Technical Solution

Accordingly, it is a first object of the present invention to provide a photoactive compound consisting of a crystalline bismuth oxide comprising doping elements, preferably from the lanthanide series, as set forth in the appended independent claim. Said photoactive compound exhibits peculiar optical properties thanks to the specific configuration of its electronic levels; particularly, such optical properties include: upconversion, down-conversion, photon down-shifting or scintillation.

It is another object of the present invention to provide a photoactive compound characterized by improved stability compared to prior art materials, and to provide a low cost photoactive compound which is radiopaque, non-toxic and easy to manufacture.

Still, a further object of the present invention is to provide a photoactive material which comprises one or more of said photoactive compounds and whose band structure is tailored for specific applications in devices or systems which conveniently exploit the phenomena of up-conversion, down-conversion, down-shifting or scintillation.

It is another important object of the present invention to provide a simple production process for said photoactive compounds as set forth in the appended independent claim. Said process allows to tailor absorption and emission characteristic of said photoactive compounds by conveniently varying the concentration and type of doping agents according to specific application needs.

A further object of the present invention is to disclose the use in optical devices or systems of said photoactive material based as set forth in the appended independent claims.

Finally, it is a last object of the present invention to provide a method for selectively converting electromagnetic radiation, as described in the appended independent claim, based on said photoactive material.

In view of the above disadvantages or drawbacks of the prior art, the present inventors have made a lot of studies on non-linear optical properties of doped bismuth oxide (III) for exploiting the application as host materials e.g. for up-converting applications. These studies were mainly directed to improve the up-converting luminescence intensity and efficiency under different light exposure, the phase and stability of the bismuth oxide (III), and finally the synthesis process thereof.

After long terms of practice and a lot experiments on different polymorphs of bismuth oxide stabilized by varying Yb content, the inventors found a new compound of nanocrystalline doped bismuth oxide which can be expressed by formula (hereinafter Formula 1):

(Bi_{1-(*x*+y+z)}MₓLn_{y}Yb_{z})₂O₃ wherein:

- M is selected from the group consisting of: Sc, Y, La, Lu, Li, Na, K, Mg, Ca, Sr, Mn, Ti, V, Mo, Re, Cr, Fe, Co, Ni, Cu, Zn, In, Al, Ga, Ta or a combination thereof,
- Ln is selected from the group consisting of: Ce, Pr, Nd, Pm, Sm, Eu, Gd, Tb, Dy, Ho, Er, Tm, or a combination thereof;
- x can be any value from 0 to about 0.4;
- y can be any value from 0.0000001 to about 0.1;
- z can be any value from 0.0000001 to about 0.4;
- x, y and z are independent parameters satisfying the relationship: x+y+z < 0.5.

The new compound can be produced by improving in a novel and inventive way the known 'Pechini synthesis process'. Moreover, the present inventors has developed a new and inventive method for engineering band-gap for specific applications by doping said compound with dopant ions and/or additional elements.

Additional objects and advantages of the invention will be set forth in part in the description which follows, and in part will be obvious from the description, or may be learned by practice of the invention.

### Advantageous Effects of Invention

### Advantageous Effects

Remarkable advantages of the present invention are listed in the following:
- The doped bismuth oxide (III) as host materials for up-converting applications is characterized by a crystalline phase (and not a glass phase) which has good stability and luminescent brightness;
- The novel compound is radiopaque, non-toxic and shows, in one of the disclosed Examples, a selective up-converting NIR signal that falls in the therapeutic window. Therefore it is suitable for medical and pharma application (e.g. in bio-imaging or bio-labeling);
- Referring to the prior art materials based on fluorides the novel compound, being an oxide, is more stable and also present the advantageous property of being radiopaque and non-toxic;
- In terms of manufacturing, the novel compound is easy to synthesize from a low-cost starting material by means of a reliable modified 'Pechini synthesis process'. Moreover, the synthesis of such crystalline doped bismuth oxide (III) operates at low temperatures and does not involve toxic process gases (e.g. sulphur) like in the production of other prior art materials. Finally, the entire production process occurs simply in ambient air environment without particular requirements of atmosphere control;
- The production process provide a variety of reliable control means for tailoring and tuning the band structure of the doped bismuth oxide according to specific application needs. A first mean is varying the type (i.e. selecting specific M and Ln in Formula 1) and concentration of dopants (i.e. selecting specific x, y, and z in Formula 1); a second mean, is combining different compounds according to the present invention; and finally, a last mean is combining different crystalline phases.

It will apparent to those skilled in the art that the features of the compound according to the present invention can not be achieved by prior art materials based on crystalline doped bismuth oxide (III).

### Brief Description of Drawings

### Description of Drawings

The present invention will be more fully understood by reference to the following drawings which are for illustrative purposes only:
- Figure 1 presents schematic diagrams of the optical processes exhibited by the photoactive compound according to the present invention can exhibit. Particularly, (a) shows photon up-conversion; (b) down-conversion, (c) photon down-shifting and (d) the phenomenon of scintillation;
- Figure 2 shows plots for samples of Example 1: (a) X-ray powder diffraction (XRPD) profiles; (b) plots of the Kubelka Munk Function used to estimate the band gap of the samples; (c) the normalized up-conversion photoluminescence spectra;
- Figure 3 shows, with reference to a Yb-Er co-doped bismuth oxide host, (a) Photoluminescence (PL) Emission Spectrum; (b) PL Decay Curves; and (c) log-log plots of Photoluminescence Intensity (I_{PL}) as a function of Pumping Power;
- Figure 4 shows, with reference to a Yb-Ho co-doped bismuth oxide host, (a) Photoluminescence (PL) Emission Spectrum; (b) PL Decay Curves; and (c) log-log plots of Photoluminescence Intensity (I_{PL}) as a function of Pumping Power;
- Figure 5 shows, with reference to a Yb-Tm co-doped bismuth oxide host, (a) Photoluminescence (PL) Emission Spectrum; (b) PL Decay Curve; and (c) log-log plot of Photoluminescence Intensity (I_{PL}) as a function of Pumping Power;
- Figure 6 presents schematically the use in a device of a photoactive material obtained by combining a plurality of the photoactive compounds according to the present invention. In (a) a series configuration for the photoactive material is shown, while in (b) a parallel configuration is shown.

These Figures illustrate and demonstrate various features and embodiments of the present invention, and of the manufacturing method thereof, but are not to be construed as limiting of the invention.

### Best Mode for Carrying out the Invention

### Best Mode

For the purpose of understanding the specification and the appended claims, in the following description the chemical elements are defined by means of the respective symbols as reported in a common periodic table of elements. For example, hydrogen is represented by its symbol H; helium is represented by He and so on. Also, it is to be understood that the chemical symbol comprises all isotopes and ions unless stated otherwise.

In addition, in the context of the present invention, the term 'photoactive compound' or 'photoactive material' or 'optical materials' will designate a compound or a material capable of emitting electromagnetic radiation preferably in the visible (hereinafter also referred as VIS) and near infrared range (hereinafter NIR) in response to the irradiation by visible light, infrared radiation (hereinafter IR), ultraviolet radiation (hereinafter UV) or other electromagnetic radiation and also by ionizing particles (e.g. alpha particles),

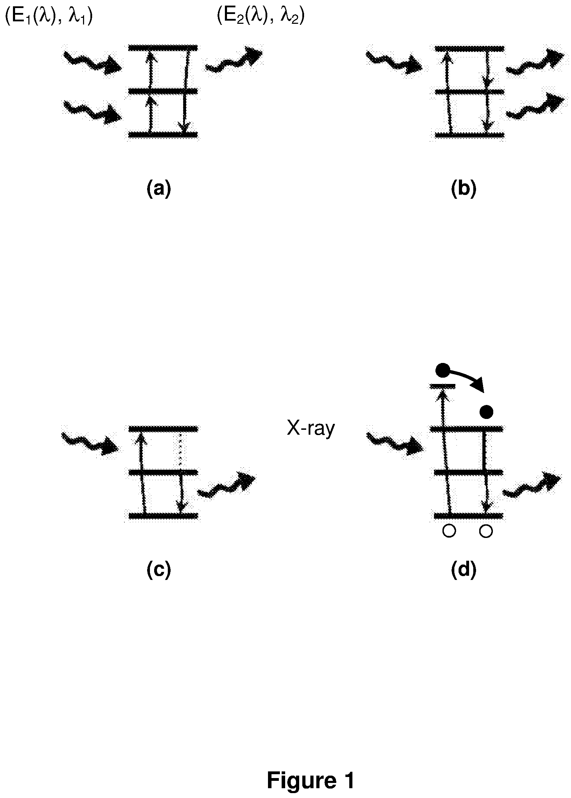

For the sake of clarity, with reference to Figure 1 cited above, in the following we define the photoactive properties exhibited by the compounds and materials according to the present invention.

The term 'up-conversion' refers to the non-linear optical phenomenon whereby a single photon of energy E₂ is emitted after the absorption of two or more photons of energy E₁ <E₂. Generally IR radiation is absorbed and VIS or NIR radiation is emitted.

The term 'down-conversion' refers to the non-linear optical phenomenon whereby two or more photons of energy E₂ are emitted following the absorption of a single photon of energy E₁> E₂. Generally UV or VIS radiation is absorbed and VIS or NIR radiation is emitted.

In the context of the present invention, devices or systems that take advantage of these nonlinear mechanisms are defined 'up-converters' and 'down-converters' respectively.

The term 'down-shifting' refers to the phenomenon whereby a photon of energy E₂ is emitted after the absorption of a single photon of energy E₁> E₂. Generally UV or VIS radiation is absorbed and VIS or NIR radiation is emitted. Devices that exploit this mechanism are defined 'down-shifter.' The term 'scintillation' refers to the emission of one or more photons after the absorption of ionizing radiation or particles. The radiation, typically X-rays, gamma rays or alpha particles striking the material generates electron-hole pairs; electrons travel in the material and lose energy by transferring said energy to other electrons; eventually, the electron-hole pairs recombine emitting photons as they return to their ground state. Devices that use this mechanism are defined 'scintillators'.

Finally, the use of 'or' means 'and/or' unless stated otherwise. It is to be understood that the detailed description is for the purpose of fully disclosing preferred embodiments of the invention without placing limitations thereon.

### DESCRIPTION OF THE PRODUCING METHOD

In the best mode of the present invention, the new compound of nanocrystalline doped bismuth oxide according to Formula 1 are advantageously produced by means of a new and inventive process modification of the so-called 'Pechini synthesis'.

The process steps are described in the following by way of example and not of limitation.

### Step 1: Complex formation,

The starting compounds are bismuth salts, preferably bismuth nitrates, to which are added a salt of ytterbium and a salt of one or more of the doping element selected from the Ln or M group in the Formula 1. Molar ratio are chosen by selecting the x, y and z parameters in Formula 1, according to the desired composition. Said bismuth and doping agents salts are solubilized in a solution of nitric acid and citric acid until a homogeneous solution is obtained. Preferably, said solution has a molarity in a range between 0.1 and 0.7 molar, and conveniently the ratio of moles of citric acid and salts is preferably equal to 3.

### Step 2: Gel formation.

The homogeneous solution is heated, under continuous stirring while maintaining a homogeneous temperature, for example by heating the solution by means of a sand bath. When the solution reaches about 100 °C ethylene glycol is added, preferably with a molarity of about 3:2 compared to citric acid and subsequently the temperature is raised to about 120 °C. The polyesterification reaction between ethylene glycol and citric acid proceeds for a few hours. At the end a solid or a gel material in the form of a polymer network is produced. Said network contains the precursors of the crystalline material whose chemical composition is described by Formula 1 according to the present invention. The inventors have advantageously found that it is possible to finely tune the structure of said polymer network which is a key point for the formation of host crystalline bismuth oxide. Particularly, the polymeric network can be tailored by acting on the following parameters: replacing the ethylene glycol with other polyalcohol; replacing the citric acid with other acids or polyacids having chelating properties; selecting different precursors of the element in Formula 1; varying the process temperature, or the duration of the polyesterification reaction.

### Step 3. Post-annealing treatment and quenching.

In the next step, the polyesterification reaction product is subjected to post-annealing treatment to remove the polymer network. Post-annealing treatment is preferably performed in a muffle kiln within the temperature range of about 500 °C to about 800 °C and for a duration between 30 minutes and 12 hours. Finally, the compound resulting at the end of the post-annealing treatment is subjected to a rapid quenching treatment, for example in air, for about 3 minutes to about 25 minutes. At the end of the quenching treatment crystalline doped nanoparticles having a chemical composition described by Formula 1 are obtained.

By choosing properly the parameters x, y and z in Formula 1, the precursors, the reaction conditions and the post-annealing duration and temperature, the compound according to the present invention having the desired structure and optical properties are obtained.

Through the implementation of the processes disclosed herein has been reached so a further and important object of the present invention.

It is obvious to those skilled in the art that the method may vary without departing from the basic concepts as disclosed herein. For example, the air used in the step of accelerated quenching may be replaced by a specific mixture of gases suitably cooled (e.g. Ar, H2, N2, or their mixture as Ar: N2 5-10%: 85-90% by volume). Furthermore, quenching in the air can be replaced by a quenching in liquid nitrogen or other cryogenic liquid.

Those skilled in the art will also appreciate how the method disclosed so far represent a significant improvement of the known solutions in the technical field.

### EXAMPLE OF PHOTOACTIVE COMPOUNDS

By way of example and not of limitation, to follow is a disclosure of some optical compounds obtained by means of the production method above described.

### Example 1

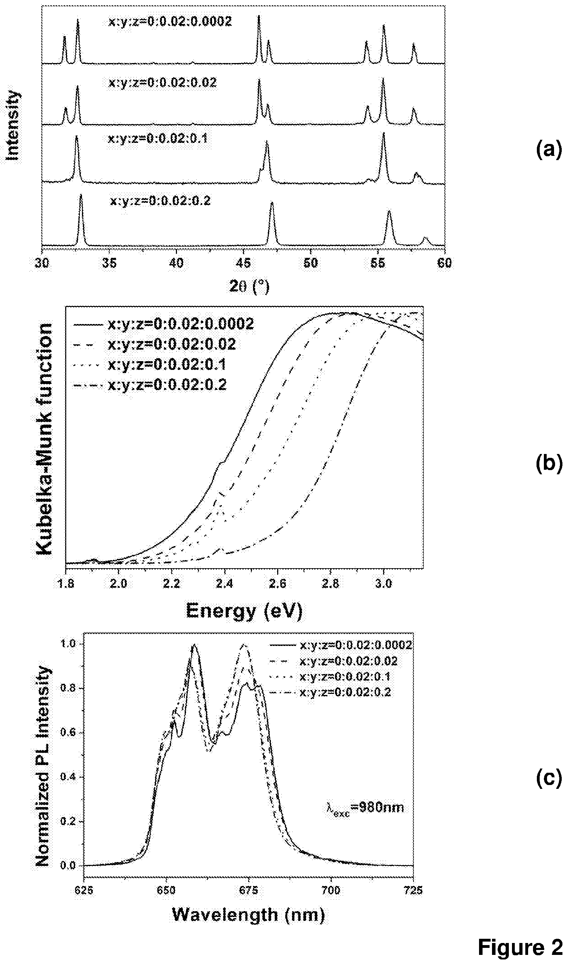

With reference to Figure 2(a), X-ray powder diffraction (XRPD) profile was performed on samples having different composition: x=0 (M is not present) y=0.02 Ln=Er and the amount z of Yb varies in the range 0.0002 to 0.2. The spectra show a change in the crystalline phase from the tetragonal β-Bi₂O₃ (first and second spectra from top) to the cubic δ-Bi2O3 (fourth spectrum from top). A combination of the phase β-Bi2O3 and the phase δ-Bi2O3 is shown in the third spectrum from top.

This example provides a demonstration of band tuning and tailoring on structural and optical properties of Bi2O3 matrix induced by doping amount. Moreover, it demonstrates the ability of the production process to control the different phases of the doped crystalline bismuth oxide and thus the optical properties thereof.

In Figure 2(b) is plotted the well-known Kubelka Munk Function which was used to estimate the band gap of the samples reported in following table.

**[Table 1]**

| **Sample** | **Energy Gap (eV)** |
|---|---|
| Yb0.1Er2 | 2.2 |
| Yb2Er2 | 2.3 |
| Yb10Er2 | 2.4 |
| Yb20Er2 | 2.6 |

It is evident that the band gap increase with increasing Yb content. Figure 2(c) shows how the up-conversion photoluminescence spectral shape of the samples changes concurrently with the Bi₂O₃ crystalline phase.

The skilled in the art will appreciate that a method for controlling the up-conversion properties has been herewith disclosed by means on this example of the present invention.

### Example 2

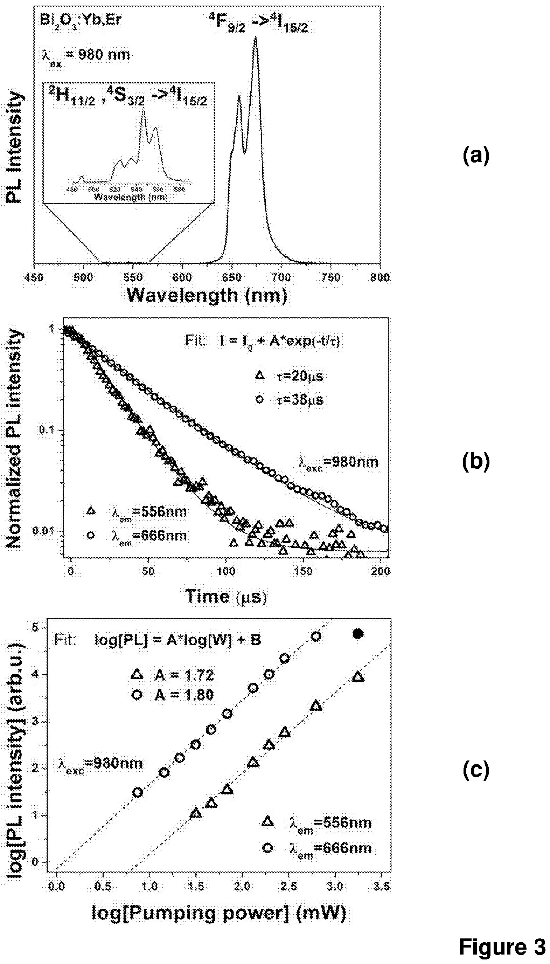

With reference to Figure 3, Yb-Er co-doped Bismuth Oxide nanocrystal samples were prepared by means of the production process described above. With reference to Formula 1 the parameters x, y and z were selected to be about 0, 0.02 and 0.1 respectively.

Photoluminescence up-conversion spectra of the nanocrystal were collected exciting the samples at a wavelength of 980 nm by means of a laser diode mounted on a standard optical bench. The spectrum (Figure 3a) presents a main emission band corresponding to the ⁴F_{9/2}-> ⁴I_{15/2} transition of Er³⁺, resulting in a bright red light emission which was clearly observed by naked eye. Although definitely less brighter than the red emission, the characteristic green emission band structure of Er³⁺ was also detected.

They are characterized by the well known Er³⁺ transitions e.g. ²H_{11/2},⁴S_{3/2} → ⁴I_{15/2}. Then, time-resolved emission measurement (Figure 3b) has been performed to estimate up-conversion lifetime of the different transitions (i.e. green and red emissions) in said nanocrystal samples. Finally, with the aim to investigate the number of photons involved in the up-conversion process, the luminescence intensity versus pumping power in double-logarithmic representation was plotted (Figure 3c): as expected for all the transitions a two-photons process was observed.

### Example 3

In a similar way, Yb-Ho co-doped Bismuth Oxide nanocrystal samples were prepared by means of the production process described above. With reference to Formula 1 the parameters x, y and z were selected to be about 0, 0.01 and 0.1 respectively.

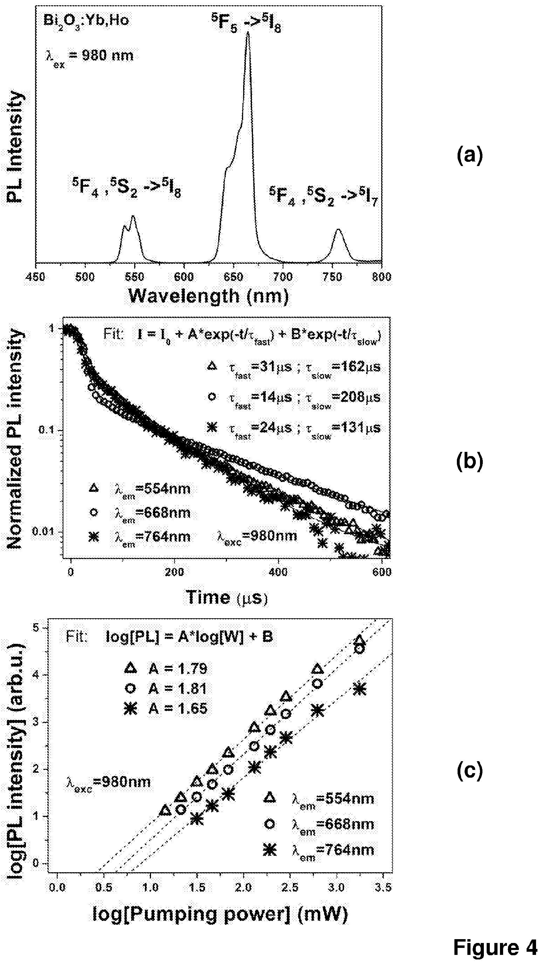

Referring to Figure 4, photoluminescence up-conversion spectra of the nanocrystal were collected exciting the samples at a wavelength of 980 nm by means of a laser diode mounted on a standard optical bench. The spectrum (Figure 4a) presents three main emission bands, centered at about 550, 665 and 755 nm and corresponding to the ⁵F₄, ⁵S₂→ ⁵I₈, ⁵F₅→ ⁵I₈ and ⁵F₄,⁵S₂→ ⁵I₇ transitions of Ho³⁺ respectively. The resulting orange light emission was clearly observed by naked eye. Similarly, time-resolved emission measurement has been performed to estimate up-conversion lifetime of the different transitions in said nanocrystal samples. It is interesting to note that the decay curves were well-fitted by a bi-exponential function. In Figure 4(b) the fast and slow components of the luminescence lifetime were reported.

Finally, with the aim to investigate the number of photons involved in the upconversion process, the luminescence intensity versus pumping power in double logarithmic representation was plotted (Figure 4c). Again a two-photons process was observed for all the transitions.

### Example 4

To conclude, Yb-Tm co-doped Bismuth Oxide nanocrystal samples were prepared by means of the same production process described above. With reference to Formula 1 the parameters x, y and z were selected to be about 0, 0.002 and 0.1 respectively.

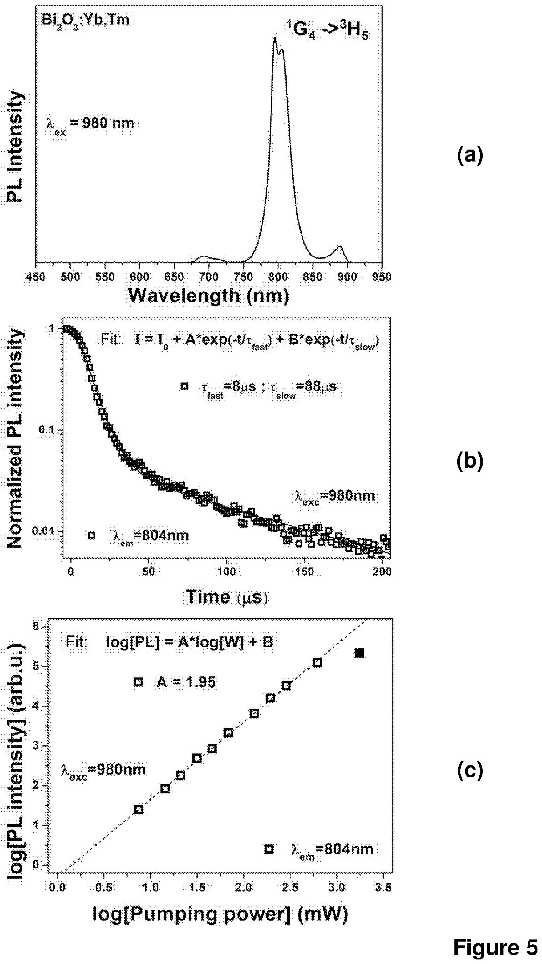

Referring to Figure 5, photoluminescence up-conversion spectra of the nanocrystal were collected exciting the samples at a wavelength of 980 nm by means of a laser diode mounted on a standard optical bench. The spectrum (Figure 5a) shows a main emission band centered at about 800 nm corresponding to the ¹G₄→ ³H₅ transition of Tm³⁺ (obviously not visible by naked eye). Surprisingly, the characteristic blue and red emissions of the Tm³⁺ were not present, although many experimental sessions were performed. The present inventors explained this result as an effect of the peculiar band structure of the sample. This optical features is potential useful for developing anti-counterfeiting system based on Yb-Tm co-doped Bismuth Oxide nanocrystal according to the present invention.

Similarly to the above Examples 2 and 3, time-resolved emission measurement (Figure 5b) and luminescence intensity versus pumping power investigation (Figure 5c) were performed. Like in the Example 3 the decay curve shows a bi-exponential behavior and once again a two-photons process was observed.

In the preferred embodiment according to the present invention, the doped bismuth oxide nanocrystals of the Examples 1, 2, 3 and 4 were produced using: hydrated nitrates of Bi, Yb, Er, Ho, Tm as precursors (from Sigma-Aldrich), ethylene glycol (from Acros Organics) as polyalcohol, citric acid (from Carlo Erba) as chelating agent, polyesterification reaction protracted for about 4 hours; post-annealing at about 800 °C for about 2 hours. The doped bismuth oxide nanocrystals have a mean size of about 40 to 50 nm. The doped bismuth oxide nanocrystals of the Examples 1, 2, 3 and 4 exhibit up-conversion thus achieving one of the main objective of the present invention.

In summary, the above illustrated Examples provide an experimental demonstration that: first, the peculiar band structure can be surprisingly controlled by the introduction of suitable dopant agents; and second, how this characteristic band structure leads to likewise characteristic up-conversion luminescence spectra.

In fact, in Example 1, the introduction of Yb allows to tune the band gap (as shown in the table). This band gap tuning induces a modification of the energy levels in the doped nanocrystal bismuth oxide which allows to control the lanthanide optical transitions; preliminary studies are providing experimental demonstration of this useful optical behavior.

It will apparent for those skilled in the art that the introduction of one element from the group M of the Formula 1, having ionic radius and/or oxidation state different from those of Bi³⁺ (e.g. Li⁺, Ga³⁺, Al³⁺) can also induce relevant variations in the crystalline field of the material.

Moreover, in the Example 1, the inventors provide experimental evidence of how the optical properties are affected by the crystal structure and particularly, how variations in the crystalline field of the different phases induce corresponding variations in the luminescence spectral shape (see Figure 2c).

The Examples 2 and 3, and more clearly the Example 4, show the up-conversion photoluminescence spectra for three particular couple of dopants (Yb-Er, Yb-Ho and Yb-Tm) characterized by a set of peaks (i.e. transitions) which come exactly from the peculiar band structure of the doped nanocrystal bismuth oxide. Particularly, in the Example 4, the characteristic blue and red emissions of the Tm³⁺ were not present.

To the best of the inventors knowledge, no other crystalline host has previously been known in the art having an optical behavior similar to that of the doped nanocrystal bismuth oxide according to the present invention.

In conclusion, the introduction of one or more doping elements causes the structure of the crystalline bismuth oxide nanoparticles to exhibit: variations in the band gap or variations in the crystalline field or variations in the crystalline phase, or a combination thereof. This interesting behavior is due to the intrinsic features of the optical compounds and to the production method herein disclosed. With reference to Figures 1 to 5, the skilled in the art will appreciate that advantageously the shape of the photoluminescence emission spectrum can be selectively modified.

In this way it is possible to tailor and tune, in a precise and controllable manner, the shapes as well as the relative intensities of the transitions (and therefore the relative color coordinates in a suitable color space) to meet specific applications and needs. For example it is possible to synthesize optical materials suitable for up-conversion which can convert NIR into VIS radiation light; or it is possible to obtain optical materials suitable for down-conversion that can convert radiation in the UV-VIS range into VISNIR radiation. This can be achieved by selecting the elements in the groups Ln or M, or the values for the parameters x, y and z in the Formula according to the present invention.

Another important object of the present invention has thus been achieved.

### Mode for the Invention

### Mode for Invention

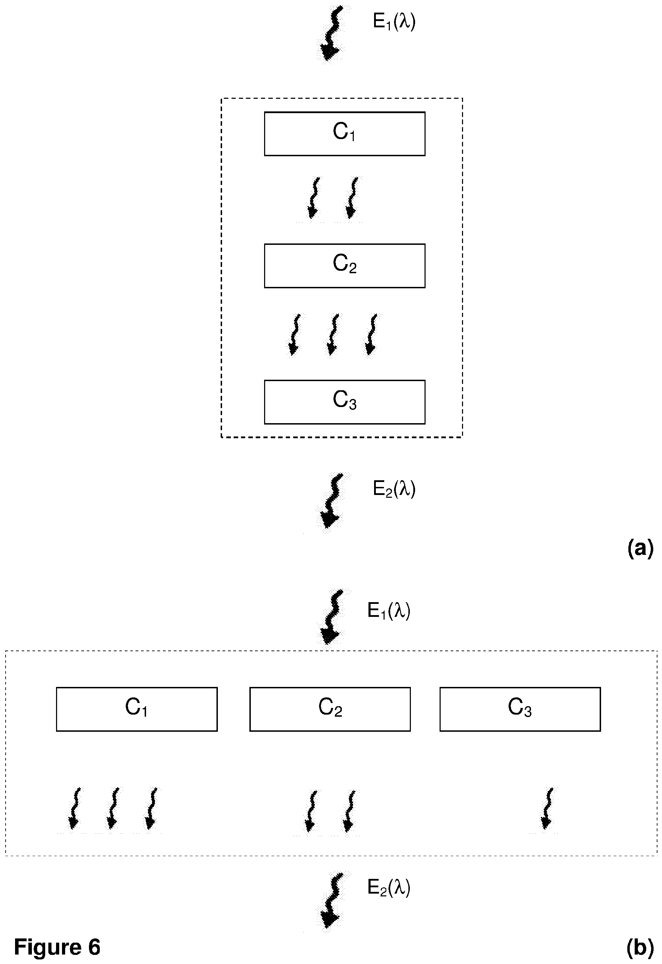

Another embodiment of the present invention, schematically presented in Figure 6, by way of example and not of limitation, consists of a photoactive material comprising a plurality photoactive compound according to the embodiments 1 and 2.

In fact, it is possible to combine a plurality n of photoactive compounds, according to the present invention, each characterized by different emission spectra E₁(lambda)ⱼ (j = 1, 2 ... n), so as to introduce a further mean to tailor the optical properties of the photoactive materials (with reference to Figure 6, the function E₂(lambda)ⱼ represents the absorption).

For instance this can be achieved with well-known techniques, e.g. by dispersing said photoactive compounds in a plurality of media (e.g. plates of a polymer such as optical grade polycarbonate or methacrylate) and disposing such media in a series configuration (as shown in Figure 6a) or in a parallel configuration (Figure 6b).

Further embodiments and examples and the advantages thereof will be apparent to one of ordinary skill in the art in view of this specification and are within the scope of the claimed invention.

The above description and drawings are only illustrative of preferred embodiments which achieve the objects, features and advantages of the present invention, and it is not intended that the present invention be limited thereto.

It will be appreciated that the scope of the present invention fully encompasses other embodiments which may become obvious to those skilled in the art. For instance, the Examples 1 to 4 herein provided have demonstrated photon up-converting properties of the optical compounds according to the present invention; in a similar way, one of ordinary skill in the art can verify the presence of the other photoactive properties exhibited by said compounds (i.e. down-conversion, photon down-shifting and scintillation) by properly selecting the excitation spectrum and the composition of the crystalline doped bismuth oxide nanoparticles according to the present invention.

Although the description and examples above contains many details, these should not be construed as limiting the scope of the invention but as merely providing illustrations of some of the presently preferred embodiments of this invention.

In the appended claims, reference to an element in the singular is not intended to mean 'one and only one' unless explicitly so stated, but rather 'one or more.' Where the characteristics and techniques mentioned in any claim are followed by reference signs, those reference signs have been included for the sole purpose of increasing the intelligibility of the claims and accordingly, such reference signs do not have any limiting effect on the interpretation of each element identified by way of example and not of limitation by such reference signs.

### Industrial Applicability

The properties of the novel compound according to the present invention are highly attractive for a wide range of applications in different markets.

First of all, crystalline doped bismuth oxide nanoparticles represent an ideal material for medical and pharma application, since they are radiopaque, non-toxic and some compositions (e.g. Yb-Tm doped bismuth oxide nanocrystal), show a selective upconverting NIR signal that falls in the therapeutic window.

Promising applications in this market, just to mention a few of them, cover: photoactive dye for bio-imaging, bio-labeling, DNA detection, dye for biological assays and diagnostic, photoactive carriers for therapeutic compositions, photoactive marker in the photodynamic therapy or in other treatments of human diseases.

Generally, the optical compounds according to the present invention can be used as sensitive elements in devices or systems wherever it is required the conversion of incident radiation in a more suitable range, e.g. as host crystals for up-converter systems, or down-converters, down shifter or scintillators.

In particular, the peculiar and tunable optical properties of the doped bismuth oxide nanocrystals (see the composition of the Example 4) can advantageously be exploited in anti-counterfeiting systems, (e.g. anti-counterfeiting tagging/labelling), but also in lighting products (e.g. filters, diffuser for LED sources) or in the photonics industry where the non-linear optical properties find a wide range of applications (e.g. optical switches, up-converters, down-converters).

Finally, the present invention find also application the solar energy industry e.g. as solar energy harvester or e.g. in multi-junction solar cells as active coating useful for improving solar spectrum matching with PV cell characteristics and thus conversion efficiency.

## Claims

1. A compound represented by the general formula (Formula 1)
(Bi_{1-(*x*+y+z)}MₓLn_{y}Yb_{z})₂O₃
wherein:
- M is selected from the group consisting of: Sc, Y, La, Lu, Li, Na, K, Mg, Ca, Sr, Mn, Ti, V, Mo, Re, Cr, Fe, Co, Ni, Cu, Zn, In, Al, Ga, Ta or a combination thereof;
- Ln is selected from the group consisting of: Ce, Pr, Nd, Pm, Sm, Eu, Gd, Tb, Dy, Ho, Er, Tm, or a combination thereof;
- x can be any value from 0 to 0.4;
- y can be any value from 0.0000001 to 0.1;
- z can be any value from 0.0000001 to 0.4;
x , y and z are independent parameters satisfying the relationship: x+y+z < 0.5.

2. The compound according to claim 1 **characterized in that** said compound exhibits one or more of the optical phenomena selected from the group consisting of: up-conversion, down-conversion, downshifting of electromagnetic radiation; scintillation under exposure of ionizing radiations or particles.

3. The compound according to claim 1 or 2 **characterized in that:**
- M is selected from the group consisting of: Y, Li, Sr, Mn, Ni, In, Al, Ga, Ta or a combination thereof;
- Ln is selected from the group consisting of: Er, Tm, Sm, Pr, Dy, Ho or a combination thereof.

4. The compound according to one or more of the proceeding claims **characterized in that** the emission or the absorption spectra of said compound are tunable by means of a suitable selection of the parameters Ln, M, x, y, z in the Formula 1, said selection being implemented in such a way that variations in the band gap or variations in the crystalline field or variations in the crystalline phase, or a combination thereof, are induced in the structure of said compound.

5. The compound according to one or more of the preceding claims **characterized in that** the structure of said compound is selected from the group consisting of: bulk crystal, nanoparticle, nanorod, nanowire, quantum wire, quantum well, nanostructured crystalline material or a combination thereof.

6. A photoactive material comprising one or more of the compounds according to any of the preceding claims.

7. The use of the photoactive material according to claim 6 as a radiation converter in an up-converter, down-converter or down-shifter device for converting an exciting radiation of spectrum and peak wavelength E1(lambda) to an emitted radiation of spectrum E2(lambda), wherein said radiation is selected in the group consisting of: infrared electromagnetic radiation, ultraviolet radiation, visible radiation or a combination thereof.

8. The use of the photoactive material according to claim 6 in a scintillation detector as sensitive element for the detection of ionizing radiation or ionizing particles.

9. The use of the photoactive material according to claim 6 in a photovoltaic device.

10. The use of the photoactive material according to claim 6 in an anti-counterfeiting device or system.

11. A method for preparing the compound according to any of claims 1 to 5, said method comprising the steps of:
- mixing a mixture comprising a bismuth salt, a ytterbium salt and at least a salt of one dopant element selected from Ln or M in the Formula 1 or a combination thereof;
- completely dissolving said salts in a aqueous solution comprising nitric acid and an alpha-hydroxycarboxylic, preferably citric acid to obtain a homogeneous solution;
- heating said homogeneous solution to 70-130 degrees centigrade while continuously stirring;
- adding to said homogeneous solution a polyalcohol, preferably ethylene glycol, and then raising the temperature to 90-150 degrees while continuously stirring said solution for 1-5 hours to promote polymerization reaction until a solid and gel material is formed;
- heating said material to t 400-900 degrees centigrade for 0,5-15 hours to burn the polymeric fraction of said gel material and obtain a powder of said compound described by the Formula 1;
- quenching said powder to room temperature, in less than 25 minutes by means of a suitable quenching method, to obtain a powder having at least one stable crystalline phase of the compound described by the Formula 1, said compound exhibiting one or more of the optical phenomena selected from the group consisting of: up-conversion, down-conversion or down-shifting of electromagnetic radiation or scintillation under exposure of ionizing radiations or particles.

12. The method according to the preceding claim, **characterized in that** said bismuth salt is at least one selected from the group consisting of: bismuth acetate, bismuth nitrate, bismuth chloride, bismuth acetylacetonate, bismuth gallate, bismuth hydroxide, bismuth citrate or a combination thereof.

13. The method according to claim 11, **characterized in that** said quenching method is selected from the group consisting of: air quenching, forced air quenching, quenching in a mixture of cooled gases, liquid nitrogen quenching, liquid helium quenching, quenching in cryogenic gas, water quenching, quenching in a liquid medium or a combinations thereof.

14. The method according to any of the claims 11 to 13, further comprising the step of adding at least one additional dopant agent to said bismuth salt so as to cause the structure of said compound to exhibit: variations in the band gap or variations in the crystalline field or variations in the crystalline phase, or a combination thereof, wherein said variations are **characterized in that** at least one photoactive property of said compound is preserved, said photoactive property is selected in the group consisting of: up-conversion, down-conversion, down-shifting, scintillation or a combination thereof.

15. A method of selectively converting an electromagnetic radiation **characterized in that** said method comprises the steps of:
- defining a suitable luminescence spectral shape;
- converting said luminescence spectral shape in one or more sets of values of the parameters (M, Ln, x, y, z) in the Formula 1;
- - obtaining the photoactive material as recited in claim 6 having a composition corresponding to said one or more sets of values of the parameters determined in the preceding step;
- - exposing said photoactive material to an exciting electromagnetic radiation of spectrum E1(lambda), wherein said photoactive material emits an emitted radiation of spectrum E2 (lambda), wherein said radiation is selected in the group consisting of: infrared electromagnetic radiation, ultraviolet radiation or visible radiation or a combination thereof.

16. The method according to the preceding claim further comprising the step of:
- defining a color function in a suitable color space, said function defining one or more peak wavelengths for a set of values of the parameters (M, Ln, x, y, z) in the Formula 1;
- selecting one or more compounds as recited in any of the claims 1-5 for each element (M, Ln, x, y, z) belonging to said set of values;
- obtaining a photoactive material consisting of the compound selected in the preceding step.

## Patentansprüche

1. Verbindung, die durch die allgemeine Formel (Formel 1) wiedergegeben wird:
(Bi_{1-(x+y+z)}MₓLn_{y}Yb_{z})₂O₃
wobei:
- M ausgewählt ist aus der Gruppe bestehend aus Sc, Y, La, Lu, Li, Na, K, Mg, Ca, Sr, Mn, Ti, V, Mo, Re, Cr, Fe, Co, Ni, Cu, Zn, In, AI, Ga, Ta oder einer Kombination davon;
- Ln ausgewählt ist aus der Gruppe bestehend aus Ce, Pr, Nd, Pm, Sm, Eu, Gd, Tb, Dy, Ho, Er, Tm oder einer Kombination davon;
- x ein Wert von 0 bis 0,4 sein kann;
- y ein Wert von 0,0000001 bis 0,1 sein kann;
- z ein Wert von 0,0000001 bis 0,4 sein kann;
x, y und z unabhängig Parameter sind, die die Beziehung x+y+z < 0,5 erfüllen.

2. Verbindung nach Anspruch 1, **dadurch gekennzeichnet, dass** die Verbindung ein oder mehrere der optischen Phänomene ausgewählt aus der Gruppe bestehend aus Aufwärtskonversion, Abwärtskonversion, Abwärtsverschiebung von elektromagnetischer Strahlung; Szintillation unter Einwirkung von ionisierenden Strahlungen oder Partikeln umfasst.

3. Verbindung nach Anspruch 1 oder 2, **dadurch gekennzeichnet, dass**
- M ausgewählt ist aus der Gruppe bestehend aus Y, Li, Sr, Mn, Ni, In, Al, Ga, Ta oder einer Kombination davon;
- Ln ausgewählt ist aus der Gruppe bestehend aus Er, Tm, Sm, Pr, Dy, Ho oder einer Kombination davon.

4. Verbindung nach einem oder mehreren der vorhergehenden Ansprüche, **dadurch gekennzeichnet, dass** die Emissions- oder die Absorptionsspektren der Verbindung mittels einer geeigneten Auswahl der Parameter Ln, M, x, y, z in der Formel 1 abstimmbar sind, wobei die Auswahl in einer solchen Weise implementiert wird, dass in die Struktur der Verbindung Variationen in der Bandlücke oder Variationen im Kristallfeld oder Variationen in der Kristallphase oder eine Kombination davon eingeführt werden.

5. Verbindung nach einem oder mehreren der vorhergehenden Ansprüche, **dadurch gekennzeichnet, dass** die Struktur der Verbindung ausgewählt ist aus der Gruppe bestehend aus Volumenkristall, Nanopartikel, Nanostäbchen, Nanodraht, Quantendraht, Quantentopf, nanostrukturiertem Kristallmaterial oder einer Kombination davon.

6. Photoaktives Material, umfassend eine oder mehrere der Verbindungen nach einem der vorhergehenden Ansprüche.

7. Verwendung des photoaktiven Materials nach Anspruch 6 als Strahlungskonverter in einem Aufwärtskonverter, Abwärtskonverter oder einer Abwärtsverschiebungsvorrichtung zum Konvertieren einer Anregungsstrahlung des Spektrums und der Peak-Wellenlänge E1(lambda) auf eine emittierte Strahlung des Spektrums E2(lambda), wobei die Strahlung ausgewählt ist aus der Gruppe bestehend aus elektromagnetischer Infrarotstrahlung, Ultraviolettstrahlung, sichtbarer Strahlung oder einer Kombination davon.

8. Verwendung des photoaktiven Materials nach Anspruch 6 in einem Szintillationsdetektor als empfindliches Element zum Detektieren von ionisierender Strahlung oder ionisierenden Partikeln.

9. Verwendung des photoaktiven Materials nach Anspruch 6 in einer Photovoltaikvorrichtung.

10. Verwendung des photoaktiven Materials nach Anspruch 6 in einer Fälschungssicherungsvorrichtung oder einem Fälschungssicherungssystem.

11. Verfahren zur Herstellung der Verbindung nach einem der Ansprüche 1 bis 5, wobei das Verfahren die Schritte umfasst:
- Mischen einer Mischung, die ein Bismutsalz, ein Ytterbiumsalz und mindestens ein Salz eines Dotierungselements ausgewählt aus Ln oder M in der Formel 1 oder eine Kombination davon umfasst;
- vollständiges Lösen der Salze in einer wässrigen Lösung, die Salpetersäure und eine alpha-Hydroxycarbonsäure, vorzugsweise Citronensäure, umfasst, um eine homogene Lösung zu erhalten;
- Erwärmen der homogenen Lösung auf 70 bis 130 Grad unter kontinuierlichem Rühren;
- Zufügen eines Polyalkohols, vorzugsweise Ethylenglykol, zu der homogenen Lösung und nachfolgend Erhöhen der Temperatur auf 90 bis 150 Grad unter kontinuierlichem Rühren der Lösung für 1 bis 5 Stunden, um die Polymerisationsreaktion zu fördern, bis ein festes und Gelmaterial gebildet wird;
- Erwärmen des Materials auf 400 bis 900 Grad Celsius für 0,5 bis 15 Stunden, um die Polymerfraktion des Gelmaterials zu verbrennen und ein Pulver der durch die Formel 1 beschriebenen Verbindung zu erhalten;
- Quenchen des Pulvers auf Raumtemperatur in weniger als 25 Minuten mittels eines geeigneten Quenchverfahrens, um ein Pulver mit mindestens einer stabilen kristallinen Phase der durch die Formel 1 beschriebenen Verbindung zu erhalten, wobei die Verbindung ein oder mehrere von den optischen Phänomenen ausgewählt aus der Gruppe bestehend aus Aufwärtskonversion, Abwärtskonversion oder Abwärtsverschiebung von elektromagnetischer Strahlung oder Szintillation unter Einwirkung von ionisierenden Strahlungen oder Partikeln zeigt.

12. Verfahren nach einem der vorhergehenden Ansprüche, **dadurch gekennzeichnet, dass** das Bismutsalz mindestens eines ausgewählt aus der Gruppe bestehend aus Bismutacetat, Bismutnitrat, Bismutchlorid, Bismutacetylacetonat, Bismutgallat, Bismuthydroxid, Bismutcitrat oder eine Kombination davon umfasst.

13. Verfahren nach Anspruch 11, **dadurch gekennzeichnet, dass** das Quenchverfahren ausgewählt ist aus der Gruppe bestehend aus Luftquenchen, forciertem Luftquenchen, Quenchen in einer Mischung gekühlter Gase, Quenchen mit flüssigem Stickstoff, Quenchen mit flüssigem Helium, Quenchen in kryogenem Gas, Wasserquenchen, Quenchen in einem flüssigen Medium oder Kombinationen davon.

14. Verfahren nach einem der Ansprüche 11 bis 13, ferner umfassend den Schritt des Zufügens von mindestens einem zusätzlichen Dotierungsmittel zu dem Bismutsalz, um so zu bewirken, dass die Struktur der Verbindung Variationen in der Bandlücke oder Variationen im Kristallfeld oder Variationen in der Kristallphase oder eine Kombination davon zeigt, wobei die Variationen **dadurch gekennzeichnet sind, dass** mindestens eine photoaktive Eigenschaft der Verbindung erhalten bleibt, wobei die photoaktive Eigenschaft ausgewählt ist aus der Gruppe bestehend aus Aufwärtskonversion, Abwärtskonversion, Abwärtsverschiebung, Szintillation oder einer Kombination davon.

15. Verfahren zum selektiven Konvertieren einer elektromagnetischen Strahlung, **dadurch gekennzeichnet, dass** das Verfahren die Schritte umfasst:
- Definieren einer geeigneten spektralen Form der Lumineszenz;
- Konvertieren der spektralen Form der Lumineszenz in einen oder mehrere Sätze von Werten der Parameter (M, Ln, x, y, z) in der Formel 1;
- Erhalten des photoaktiven Materials nach Anspruch 6 mit einer Zusammensetzung, die dem einen oder den mehreren Sätzen von Werten der Parameter entspricht, die in dem vorhergehenden Schritt ermittelt wurden;
- Einwirken einer anregenden elektromagnetischen Strahlung des Spektrums E1(lambda) auf das photoaktive Material, wobei das photoaktive Material ein emittiertes Strahlungsspektrum E2(lambda) emittiert, wobei die Strahlung ausgewählt ist aus der Gruppe bestehend aus elektromagnetischer Infrarotstrahlung, Ultraviolettstrahlung oder sichtbarer Strahlung oder einer Kombination davon.

16. Verfahren nach einem der vorhergehenden Ansprüche, ferner umfassend den Schritt:
- Definieren einer Farbfunktion in einem geeigneten Farbraum, wobei die Funktion eine oder mehrere Peak-Wellenlängen für einen Satz von Werten der Parameter (M, Ln, x, y, z) in der Formel 1 definiert;
- Auswählen von einer oder mehreren Verbindungen nach einem der Ansprüche 1 bis 5 für jedes Element (M, Ln, x, y, z), das zu dem Satz von Werten gehört;
- Erhalten eines photoaktiven Materials, das aus der Verbindung besteht, die in dem vorhergehenden Schritt ausgewählt wurde.

## Revendications

1. Composé représenté par la formule générale (Formule 1)
(Bi_{1-(x+y+z)}MₓLn_{y}Yb_{z})₂O₃
dans laquelle:
- M est choisi dans le groupe constitué par : Sc, Y, La, Lu, Li, Na, K, Mg, Ca, Sr, Mn, Ti, V, Mo, Re, Cr, Fe, Co, Ni, Cu, Zn, In, Al, Ga, Ta ou une combinaison de ceux-ci ;
- Ln est choisi dans le groupe constitué par : Ce, Pr, Nd, Pm, Sm, Eu, Gd, Tb, Dy, Ho, Er, Tm ou une combinaison de ceux-ci ;
- x peut être n'importe quelle valeur comprise entre 0 et 0,4 ;
- y peut être n'importe quelle valeur comprise entre 0,0000001 et 0,1 ;
- z peut être n'importe quelle valeur comprise entre 0,0000001 à 0,4 ;
x , y et z sont des paramètres indépendants satisfaisant la relation : x+y+z < 0,5.

2. Composé selon la revendication 1 **caractérisé en ce que** ledit composé présente un ou plusieurs des phénomènes optiques choisis dans le groupe constitué par : la conversion ascendante, la conversion descendante, le décalage vers le bas de rayonnement électromagnétique ; la scintillation sous l'exposition de rayonnements ionisants ou de particules.

3. Composé selon la revendication 1 ou 2 **caractérisé en ce que** :
- M est choisi dans le groupe constitué par : Y, Li, Sr, Mn, Ni, In, Al, Ga, Ta ou une combinaison de ceux-ci ;
- Ln est choisi dans le groupe constitué par : Er, Tm, Sm, Pr, Dy, Ho ou une combinaison de ceux-ci.

4. Composé selon une ou plusieurs des revendications précédentes **caractérisé en ce que** l'émission ou les spectres d'absorption dudit composé sont réglables au moyen d'une sélection appropriée des paramètres Ln, M, x, y, z dans la Formule 1, ladite sélection étant mise en oeuvre de telle sorte que des variations dans la bande interdite ou des variations du champ cristallin ou des variations de la phase cristalline, ou une combinaison de ceux-ci, soient induites dans la structure dudit composé.

5. Composé selon une ou plusieurs des revendications précédentes **caractérisé en ce que** la structure dudit composé est choisie dans le groupe constitué par : un cristal massif, une nanoparticule, une nanotige, un nanofil, un fil quantique, un puits quantique, un matériau cristallin nanostructuré ou une combinaison de ceux-ci.

6. Matériau photoactif comprenant un ou plusieurs des composés selon l'une quelconque des revendications précédentes.

7. Utilisation du matériau photoactif selon la revendication 6 en tant que convertisseur de rayonnement dans un convertisseur élévateur, abaisseur ou abaisseur de fréquence pour convertir un rayonnement d'excitation de spectre et une longueur d'onde de pic E1(lambda ) à un rayonnement émis du spectre E2(lambda), ledit rayonnement étant choisi dans le groupe constitué par : un rayonnement électromagnétique infrarouge, un rayonnement ultraviolet, un rayonnement visible ou une combinaison de ceux-ci.

8. Utilisation du matériau photoactif selon la revendication 6 dans un détecteur de scintillation en tant qu'élément sensible pour la détection de rayonnement ionisant ou de particules ionisantes.

9. Utilisation du matériau photoactif selon la revendication 6 dans un dispositif photovoltaïque.

10. Utilisation du matériau photoactif selon la revendication 6 dans un dispositif ou un système anti-contrefaçon.

11. Procédé de préparation du composé selon l'une quelconque des revendications 1 à 5, ledit procédé comprenant les étapes consistant à :
- mélanger un mélange comprenant un sel de bismuth, un sel d'ytterbium et au moins un sel d'un élément dopant choisi parmi Ln ou M dans la Formule 1 ou une combinaison de ceux-ci ;
- dissoudre complètement lesdits sels dans une solution aqueuse comprenant de l'acide nitrique et un acide alpha-hydroxycarboxylique, de préférence de l'acide citrique pour obtenir une solution homogène ;
- chauffer ladite solution homogène à 70 -130 degrés Celsius sous agitation continue ;
- ajouter à ladite solution homogène un polyalcool, de préférence l'éthylène glycol, puis à élever la température à 90 -150 degrés tout en agitant ladite solution en continu pendant 1 à 5 heures pour favoriser la réaction de polymérisation jusqu'à ce qu'un matériau solide et gélifié soit formé ;
- chauffer ledit matériau à la température de 400 -900 degrés Celsius pendant 0,5 à 15 heures pour brûler la fraction polymère dudit matériau de gel et obtenir une poudre dudit composé décrite par la Formule 1 ;
- tremper ladite poudre à température ambiante, en moins de 25 minutes au moyen d'un procédé de trempe adapté, pour obtenir une poudre ayant au moins une phase cristalline stable du composé décrit par la Formule 1, ledit composé présentant un ou plusieurs des phénomènes optiques choisis dans le groupe constitué par : la conversion ascendante, la conversion descendante ou le décalage vers le bas d'un rayonnement électromagnétique ou d'une scintillation sous l'exposition de rayonnements ionisants ou de particules.

12. Procédé selon la revendication précédente, **caractérisé en ce que** ledit sel de bismuth est au moins un élément choisi dans le groupe constitué par : l'acétate de bismuth, le nitrate de bismuth, le chlorure de bismuth, l'acétylacétonate de bismuth, le gallate de bismuth, l'hydroxyde de bismuth, le citrate de bismuth ou une combinaison de ceux-ci.

13. Procédé selon la revendication 11, **caractérisé en ce que** ledit procédé de trempe est choisi dans le groupe constitué par : la trempe à l'air, la trempe à l'air forcé, la trempe dans un mélange de gaz refroidis, la trempe à l'azote liquide, la trempe à l'hélium liquide, la trempe dans un gaz cryogénique, la trempe à l'eau, la trempe dans un milieu liquide ou une combinaison de ceux-ci.

14. Procédé selon l'une quelconque des revendications 11 à 13, comprenant en outre l'étape consistant à ajouter au moins un agent dopant supplémentaire audit sel de bismuth de manière à ce que la structure dudit composé présente : des variations de la bande interdite ou des variations du champ cristallin ou des variations de la phase cristalline, ou une combinaison de ceux-ci, lesdites variations étant **caractérisées en ce qu'**au moins une propriété photoactive dudit composé est préservée, ladite propriété photoactive étant choisie dans le groupe constitué par : une conversion ascendante, une conversion descendante, un décalage vers le bas, une scintillation ou une combinaison de ceux-ci.

15. Procédé de conversion sélective d'un rayonnement électromagnétique **caractérisé en ce que** ledit procédé comprend les étapes consistant à :
- définir une forme spectrale de luminescence appropriée ;
- convertir ladite forme spectrale de luminescence en un ou plusieurs ensemble(s) de valeurs des paramètres (M, Ln, x, y, z) dans la Formule 1 ;
- obtenir du matériau photoactif tel que mentionné dans la revendication 6 ayant une composition correspondant audit ou auxdits ensemble(s) de valeurs des paramètres déterminés à l'étape précédente ;
- exposer ledit matériau photoactif à un rayonnement électromagnétique d'excitation du spectre E1(lambda), ledit matériau photoactif émettant un rayonnement de spectre émis E2 (lambda), ledit rayonnement étant choisi dans le groupe constitué par : un rayonnement électromagnétique infrarouge, un rayonnement ultraviolet ou un rayonnement visible ou une combinaison de ceux-ci.

16. Procédé selon la revendication précédente comprenant en outre l'étape consistant à :
- définir une fonction de couleur dans un espace de couleur approprié, ladite fonction définissant une ou plusieurs longueurs d'onde de pic pour un ensemble de valeurs des paramètres (M, Ln, x, y, z) dans la Formule 1 ;
- sélectionner un ou plusieurs composé(s) tel(s) que décrit(s) dans l'une quelconque des revendications 1 à 5 pour chaque élément (M, Ln, x, y, z) appartenant audit ensemble de valeurs ;
- obtenir un matériau photoactif constitué du composé choisi dans l'étape précédente.
